# EUROPÄISCHE PATENTANMELDUNG

(11) **EP 2 893 856 A1**
(43) Veröffentlichungstag der Anmeldung: **15.07.2015**
(21) Anmeldenummer: 15150246.5
(22) Anmeldetag: 07.01.2015
(51) Int. Cl.: A47J 31/42, A47J 42/50

(54) **Automat zur Herstellung eines Aufgussgetränkes**

(30) Priorität: 14.01.2014 DE 102014100333
(71) Anmelder: Miele & Cie. KG, 33332 Gütersloh (DE)
(72) Erfinder: van Pels, Ulrich, 33378 Rheda-Wiedenbrück (DE); Tembaak, Jutta, 49492 Westerkappeln (DE)

(57) **Zusammenfassung**

Es wird ein Automat (1) zur Herstellung eines Aufgussgetränkes umfassend mindestens zwei, zur Aufnahme je einer Sorte eines pflanzlichen Produkts geeignete Kammern (2, 3, 4, 5), die bodenseitig jeweils wenigstens eine Öffnung (6, 7, 8, 9) aufweisen, durch die das pflanzliche Produkt unter Nutzung der Schwerkraft in eine Brüheinheit (10) überführbar ist, vorgestellt, wobei erfindungsgemäß den Kammern (2, 3, 4, 5) in Transportrichtung des pflanzlichen Produktes betrachtet, ein Gleitschieber (11, 12, 13) nachgeordnet ist, der zum Öffnen einer der Kammern (2, 3, 4, 5) mindestens eine, mit der Öffnung (6, 7, 8, 9) dieser Kammer (2, 3, 4, 5) in Überdeckung bringbare Auslassöffnung (14, 15, 16) aufweist.

## Beschreibung

Die Erfindung betrifft einen Automaten zur Herstellung eines Aufgussgetränkes nach dem Oberbegriff des Patentanspruches 1.

Ein pflanzliches Produkt der hier betroffenen Art kann beispielsweise Kakao, Tee oder Kaffee sein, wobei diese pflanzlichen Produkte in unterschiedlichen Darreichungsformen angeboten werden. So besteht Tee überwiegend aus getrockneten und teilweise geschnittenen Blättern, während Kakao zumeist eine Pulverform aufweist, was überwiegend auch für Kaffee zutrifft. Darüber hinaus wird, um beim Beispiel des Kaffees zu bleiben, dieser auch in Bohnenform angeboten, so dass vor der Zubereitung eines Aufgussgetränkes die Kaffeebohnen zunächst gemahlen werden müssen. Zu jedem der genannten pflanzlichen Produkte gibt es jeweils unterschiedliche Sorten, wobei eine Sorte ganz allgemein ausgedrückt eine Variante einer Nutzpflanze darstellt, die sich durch einzelne Merkmale von anderen Sorten dieser Nutzpflanze unterscheidet. So gibt es zum Beispiel unterschiedliche Kaffeesorten, wie die Sorte "Arabica", "Robusta", Excelsa", "Liberica" und andere, die teilweise erhebliche geschmackliche Unterschiede aufweisen. Ferner wird insbesondere Kaffe in verschiedenen Varianten, also beispielsweise als schwarzer Kaffe, Espresso, als Milchkaffee oder Cappuchino zubereitet.

Zur Zubereitung eines Aufgussgetränkes aus den genannten pflanzlichen Produkten werden verstärkt Automaten eingesetzt, die in diesem Sinne multivalent einsetzbar sein müssen. Folglich ist es von Vorteil, wenn ein derartiger Automat die Herstellung eines Aufgussgetränkes aus verschiedenen pflanzlichen Produkten oder unterschiedlichen Sorten eines pflanzlichen Produktes gestattet. Um beim Beispiel des Kaffees zu bleiben, ist es wünschenswert, mit einem einzigen Automaten zum Beispiel einen koffeinhaltigen Kaffee, einen koffeinfreien Kaffee, einen Espresso oder ganz einfach Kaffeegetränke aus verschiedenen Kaffeesorten zubereiten zu können. Um einem derartigen Anspruch gerecht zu werden, weisen bekannte und bereits im Einsatz befindliche Automaten zur Herstellung eines Aufgussgetränkes bislang jedoch nur zwei, zur Aufnahme je einer Sorte eines pflanzlichen Produkts geeignete Kammern auf, die bodenseitig über jeweils wenigstens eine Öffnung verfügen. Diese Öffnung dient dazu, das pflanzliche Produkt unter Nutzung der Schwerkraft in eine Brüheinheit zu überführen. Dabei kann zwischen der Kammer und der Brüheinheit ein Mahlwerk zum Zerkleinern von Bohnen vorgesehen sein.

Eine derartige Lösung geht beispielsweise aus der EP 2 022 379 A1 für ein pflanzliches Produkt in Pulverform hervor, bei dem es sich beispielsweise um Kakaopulver handelt. Die in dieser Druckschrift beschriebene Lösung weist lediglich eine einzelne Kammer zur Aufnahme des pulverförmigen pflanzlichen Produktes auf, die in eine Dosiereinrichtung mündet. Über diese Dosiereinrichtung wird eine vorab definierbare Menge des pflanzlichen Produktes in einen Pulverkanal abgegeben, der in eine Mischkammer mündet, in der das pflanzliche Produkt mit einer Flüssigkeit, wie Wasser, vermengt wird. Über einen Produktauslass kann das somit zubereitete Getränk schließlich entnommen werden. Zur Unterstützung des Transports des pulverförmigen pflanzlichen Produktes von der Kammer in die Mischkammer ist zusätzlich die Zuführung einer Luftströmung im Bereich des Pulverkanals vorgesehen.

Die konstruktive Ausführung eines derartigen Automaten ist relativ aufwändig und gestattet zudem lediglich die Verarbeitung eines pulverförmigen pflanzlichen Produktes. Folglich ist mit diesem Automaten kein Wechsel zwischen verschiedenen pflanzlichen Produkten für die Zubereitung verschiedener Aufgussgetränke möglich.

Aus der EP 1 597 991 A1 geht darüber hinaus ein Automat zur Herstellung eines Aufgussgetränkes hervor, der mindestens zwei Kammern aufweist, wobei in eine der Kammern beispielsweise ein pulverförmiges pflanzliches Produkt und in die zweite Kammer ein aus Bohnen bestehendes pflanzliches Produkt, also beispielsweise Kaffee, gefüllt werden kann. Unterhalb der in einem gemeinsamen Behälter ausgebildeten Kammern befindet sich eine durch eine verschwenkbare Klappe verschließbare Öffnung zur Auswahl der Zuführung je einer Sorte der in den Kammern enthaltenen pflanzlichen Produkte in die Klappe. Die Klappe ist nach dem Offenbarungsgehalt der Druckschrift um eine Rotationsachse schwenkbar und schalenförmig sowie mit einem gerundeten Bodenabschnitt ausgeführt. Darüber hinaus ist die Klappe in zwei Teile unterteilt, so dass ein pflanzliches Produkt aus je einer der Kammern von je einem Teil der Klappe aufgenommen werden kann.

Die relativ aufwändige konstruktive Gestaltung einer derartigen Ausführung eines Automaten birgt das Risiko einer erhöhten Störanfälligkeit. Zudem ist der in dieser Druckschrift vorgestellte Automat nur für die Aufnahme von zwei unterschiedlichen pflanzlichen Produkten geeignet. Nachteilig ist zudem, dass durch die Teilevielzahl eine optimale Reinigung und damit die Befreiung von Resten der pflanzlichen Produkte, die auch aus hygienischen Gründen stets geboten ist, erheblich erschwert wird.

Eine weitere, sehr aufwändige Lösung ist am Beispiel eines Kaffeeautomaten aus der DE 20 2011 005 003 U1 bekannt. Hierbei kommt für die Aufnahme zweier unterschiedlicher pflanzlicher Produkte ein Behälter zum Einsatz, der durch eine Trennwand getrennt zwei Kammern aufweist. Die Kammern verfügen im Bereich ihrer bodenseitigen Öffnung über ein aktives Verschlusselement in Form je einer Transportschnecke. Diese Transportschnecken werden über mindestens einen Elektromotor angetrieben und gestatten wahlweise die Förderung eines pflanzlichen Produktes aus je einer der Kammern. Die auf diese Weise geförderten pflanzlichen Produkte werden über einen gemeinsamen Auslauf in ein Mahlwerk überführt und hier zu Pulver gemahlen, weshalb der beschriebene Automat ausschließlich für die Zubereitung von Kaffee geeignet ist. Für die Ansteuerung der Transportschnecken muss zudem eine relativ aufwändige Steuerungselektronik vorgesehen werden. Mit einer derartigen Ausführung eines Automaten zur Herstellung eines Aufgussgetränkes kann zwar eine relativ exakte Trennung der pflanzlichen Produkte erreicht werden. Nachteilig ist hierbei jedoch, dass letztlich eine Zusammenführung im gemeinsamen Behälterauslauf erfolgt, was dazu führt, dass der Nutzer eines derartigen Automaten nach dem Wechsel des pflanzlichen Produktes kein sortenreines Getränk zubereiten kann. Vielmehr muss damit gerechnet werden, das noch Reste des zuvor verarbeiteten pflanzlichen Produktes in dem gemeinsamen Auslauf beziehungsweise im Mahlwerk vorhanden sind. Ein derartiger Zustand ist insbesondere für Feinschmecker unerwünscht und erweist sich dann als nachteilig, wenn beispielsweise ein entkoffeinierter Kaffee zubereitet werden soll, nachdem zuvor in dem Automaten ein koffeinhaltiger Kaffee hergestellt wurde oder umgekehrt. Ein weiterer Nachteil dieses Automaten besteht in dem sehr komplexen Aufbau der gesamten Fördereinrichtung.

Die DE 10 2011 054 166 A1 beschreibt am Beispiel eines Kaffeeautomaten eine weitere, sehr spezielle Ausführung eines Automaten zur Herstellung eines Aufgussgetränkes. Auch dieser Automat verfügt über einen Behälter, der in zwei unterschiedliche Kammern aufgeteilt ist. Beide Kammern münden bodenseitig in je eine Dosierkammer, die durch einen horizontal bewegbaren Kolben geöffnet beziehungsweise verschlossen werden kann. Nach Freigabe der Dosierkammer durch den Kolben, kann eine vorab definierte und der gewünschten Stärke des zuzubereitenden Kaffees entsprechende Menge Kaffeebohnen in die Dosierkammer fallen. Ist diese Dosierung abgeschlossen, vollzieht der Kolben eine Gegenbewegung und übt damit einen Druck auf die nunmehr in der Dosierkammer vorhandenen Kaffeebohnen aus. Durch diesen Druck wird eine federnd angeordnete Klappe verschwenkt, die auf diese Weise eine bodenseitig der Dosierkammer vorhandene Öffnung freigibt, so dass die in der Dosierkammer vorhandenen Kaffeebohnen in ein darunter angeordnetes Mahlwerk überführt werden können.

Bei einer derartigen Ausführung steht zu befürchten, dass durch den vom Kolben ausgeübten Druck auf die Kaffeebohnen einzelne Kaffeebohnen zwischen der federnd ausgeführten Klappe und dem Kolben festgeklemmt werden und damit nicht in das darunter befindliche Mahlwerk gelangen können. Dies hätte jedoch zur Folge, dass der Kaffee nicht die gewünschte Stärke aufweist und die Bohnen zudem nach einem Wechsel der Kaffeesorte noch nachträglich in das Mahlwerk gelangen und damit das hergestellte Aufgussgetränk Teile des zuvor zubereiteten Getränkes aufweist. Dies bedeutet, dass zumindest die erste Tasse Kaffee anteilig aus dem vorherigen Mahlvorgang zubereitet wird. Dieser Umstand ist aus den bereits beschriebenen Gründen unerwünscht. Die Druckschrift gibt daher keine Lösung an, wie ein sortenreines Aufgussgetränk zubereitet werden kann. Der auch hierbei gegebene, komplexe Aufbau des gesamten Automaten ist nicht nur hinsichtlich der Kosten, sondern auch bezüglich der Störanfälligkeit nachteilig.

Eine Lösungsmöglichkeit, wenigstens das Mahlwerk eines Automaten zur Herstellung eines Aufgussgetränkes von Resten des zuvor zubereiteten Getränkes zu befreien, gibt am Beispiel eines Kaffeeautomaten die EP 2 524 636 A1 an. Hierbei werden die in das Mahlwerk eingebrachten Kaffeebohnen zunächst in herkömmlicher Weise zwischen zwei Malelementen zu Pulver verarbeitet. Unterhalb der Malelemente ist ein kegelförmig gestaltetes Begrenzungselement vorhanden, über das das Pulver anschließend in einen Pulverschacht überführt wird. Zur Befreiung von Kaffeeresten einer zuvor verarbeiteten Kaffeesorte ist auf der Oberfläche des Begrenzungselementes ein Schabelement angeordnet, das bei der Drehung des Mahlwerkes die Pulverreste von dem Begrenzungselement abschabt. Mit einer derartigen Lösung kann eine relativ gute Reinigung des Mahlwerkes erreicht werden.

Der Erfindung stellt sich das Problem, einen Automaten zur Herstellung eines Aufgussgetränkes aus verschiedenen Sorten pflanzlicher Produkte bereitzustellen, mit dem das zuzubereitende Aufgussgetränk sortenrein hergestellt werden kann und ein problemloser Wechsel zwischen verschiedenen Sorten pflanzlicher Produkte möglich ist.

Erfindungsgemäß wird dieses Problem durch einen Automaten mit den Merkmalen des Patentanspruchs 1 gelöst.

Vorteilhafte Ausgestaltungen und Weiterbildungen der Erfindung ergeben sich aus den sich anschließenden Unteransprüchen.

Ein Automat zur Herstellung eines Aufgussgetränkes, umfassend mindestens zwei, zur Aufnahme je einer Sorte eines pflanzlichen Produkts geeignete Kammern, die bodenseitig jeweils wenigstens eine Öffnung aufweisen, durch die das pflanzliche Produkt unter Nutzung der Schwerkraft in eine Brüheinheit überführbar ist, wurde erfindungsgemäß dahingehend weitergebildet, dass den Kammern, in Transportrichtung des pflanzlichen Produktes betrachtet, ein Gleitschieber nachgeordnet ist, der zum Öffnen einer der Kammern mindestens eine, mit der Öffnung dieser Kammer unmittelbar in Überdeckung bringbare Auslassöffnung aufweist.

Die mit der Erfindung erreichbaren Vorteile sind darin zu sehen, dass ein zügiger Wechsel zwischen verschiedenen Sorten pflanzlicher Produkte, also beispielsweise zwischen verschiedenen Kaffeesorten, möglich ist. Der Automat ist zudem insgesamt sehr einfach aufgebaut und gestattet die Zubereitung eines sortenreinen Aufgussgetränkes woran der Gleitschieber einen maßgeblichen Anteil trägt. Dieser ist durch die aneinander gleitenden Oberflächen in der Lage, auch geringe Reste eines zuvor bearbeiteten pflanzlichen Produktes abzustreifen. Durch den Einsatz des sehr einfach aufgebauten Gleitschiebers können zudem mehr als zwei unterschiedliche Pflanzensorten verarbeitet werden, so dass der Automat auch mehr als zwei Kammern aufweisen kann. Damit ist er sehr flexibel einsetzbar und für unterschiedliche Anwendungen nutzbar.

Eine erste Ausgestaltung der Erfindung sieht einen die Kammern aufweisenden Behälter vor. Mit anderen Worten werden die Kammern in einen Behälter integriert. Durch diese Maßnahme wird nicht nur eine optisch ansprechende Gestaltung des Automaten möglich. Es ist darüber hinaus auch denkbar, den Behälter mit sämtlichen Kammern einstückig herzustellen. Dabei kann der Behälter zum Beispiel in einem geeigneten Gussverfahren aus Kunststoff erzeugt werden. Auf diese Weise ist der Herstellungsaufwand in entscheidendem Maße reduzierbar, was sich letztlich auch positiv auf die Herstellungskosten auswirkt.

Vorzugsweise wird entsprechend einer Weiterbildung der Erfindung die Aufteilung des Behälters in die Kammern durch mindestens eine, in dem Behälter ausgebildete oder in den Behälter einsetzbare Trennwand erreicht.

Wird die Trennwand in dem Behälter ausgebildet, so kann dieser in der zuvor beschriebenen Weise beispielsweise durch ein Spritzgussverfahren hergestellt werden.

Bei einer in den Behälter einsetzbaren Trennwand besteht hingegen die Möglichkeit, den Behälter sehr flexibel den jeweiligen Anforderungen anzupassen, indem beispielsweise mehrere Trennwände in hierfür in dem Behälter vorgesehene Aufnahmen eingesteckt oder eingesetzt werden. Auf diese Weise besteht folglich die Möglichkeit, den Behälter in zwei oder mehr Kammern zu unterteilen.

Um die Öffnung der Kammern mit der Auslassöffnung des Gleitschiebers in Überdeckung zu bringen, ist erfindungsgemäß eine Relativbewegung zwischen Gleitschieber und Behälter vorgesehen.

Dabei besteht einerseits die Möglichkeit, den Gleitschieber und/oder den Behälter um eine Rotationsachse zu drehen oder zumindest eines der genannten Bauteile entlang einer Ebene zu verschieben. Je nach zur Verfügung stehendem Bauraum kann folglich entweder der Behälter oder der Gleitschieber oder können beide gemeinsam bewegt werden.

Diese Relativbewegung ermöglicht daher eine sehr kompakte Ausführung des Automaten zur Herstellung eines Aufgussgetränkes.

Entsprechend einer weiterführenden Maßnahme nach der Erfindung ist eine Möglichkeit der Ausführung des Gleitschiebers darin zu sehen, dass dieser eine einfache Scheibe mit mindestens einer darin eingebrachten Auslassöffnung aufweist. Der scheibenförmige Teil des Gleitschiebers wird dabei in einer geeigneten Führung aufgenommen und kann in dieser Führung verschoben oder gedreht werden.

Bei einer alternativen Variante ist es möglich, dass der Behälterboden eben ausgeführt und mit der Öffnung zur Abführung der pflanzlichen Produkte versehen ist. Dieser ebene Behälterboden "gleitet" im Sinne einer Verschiebung oder einer Drehbewegung auf einer korrespondierenden Oberfläche des Gleitschiebers, so dass je nach Anwahl der entsprechenden Kammer im Behälter eine geeignete Auslassöffnung des Gleitschiebers mit der Öffnung des Behälters in Überdeckung gelangen können.

Von Bedeutung ist auch hierbei, dass eine Relativbewegung zwischen Behälter und Gleitschieber erfolgt und somit sowohl eines der genannten Bauteile, als auch beide zeitgleich bewegt werden können.

Darüber hinaus kann der Gleitschieber auch als eine Aufnahmeschale ausgeführt sein. Ist dies der Fall, so kann der Behälter in den Gleitschieber eingesetzt werden, so dass zumindest Teile der Außenoberfläche des Behälters an der Innenoberfläche des Gleitschiebers entlang gleiten. Mit dieser Variante ist insbesondere eine sichere und zuverlässige Führung des Behälters innerhalb des Gleitschiebers gegeben.

Eine besondere Problematik stellt sich bei einem erfindungsgemäßen Automaten immer dann, wenn der Automat zur Herstellung eines Aufgussgetränkes mehr als zwei Kammern aufweist. In einem solchen Fall muss die Anordnung der Öffnungen der Kammern mit der wenigstens einen Auslassöffnung des Gleitschiebers in einer Art und Weise vorgesehen werden, die verhindert das pflanzliche Produkte aus einer nicht angewählten Kammer in die Brüheinheit gelangen können. So müssen beispielsweise bei der Verwendung von vier Kammern drei Kammern verschlossen werden, während die vierte Kammer diejenige mit dem ausgewählten pflanzliche Produkt ist. Hierzu geht eine Weiterbildung der Erfindung dahin, dass der Gleitschieber aus zwei, koaxial übereinander angeordneten Scheiben mit jeweils mindestens einer Auslassöffnung besteht.

Durch die Anordnung mehrerer Scheiben übereinander gelingt es, sämtliche nicht benötigte Öffnungen der Kammern zu verschließen und nur die mit dem pflanzliche Produkt der Wahl befüllte Kammer anzuwählen.

Zur Umsetzung dieses Lösungsvorschlages ist es von besonderem Vorteil, wenn eine Steuerungseinheit zur Ansteuerung der Bewegung des Behälters und/oder des Gleitschiebers vorhanden ist. Diese Steuerungseinheit ermöglicht es, die zuvor beschriebene Relativbewegung zwischen Behälter und Gleitschieber umzusetzen. Eine weitere Möglichkeit des Einsatzes der Steuerungseinheit besteht darin, diese für die Ansteuerung eines Elektromotors beziehungsweise eines Getriebes zu verwenden, das zwischen einem Elektromotor und dem Behälter beziehungsweise zwischen Elektromotor und Gleitschieber angeordnet ist. Das Getriebe kann ferner dazu verwendet werden, die vom Elektromotor aufgebrachte Drehzahl zu übersetzen beziehungsweise entweder auf den Gleitschieber oder auf den Behälter zu übertragen. Die Steuerungseinheit ist folglich für die Koordination der einzelnen Abläufe nutzbar.

Da die Bewegungsabläufe zwischen Behälter und Gleitschieber verhältnismäßig gering sind, bietet sich als Elektromotor insbesondere ein Schrittmotor an.

Darüber hinaus kann das Getriebe erfindungsgemäß ein Zahnrad- oder ein Reibradgetriebe sein.

Die zuvor bereits erwähnte Fertigungsmöglichkeit des Behälters und/oder des Gleitschiebers aus einem Kunststoff ermöglicht darüber hinaus auch, dass das als Zahnrad- oder Reibradgetriebe ausgeführte Getriebe integraler Bestandteil des Behälters und/oder des Gleitschiebers ist. Mit anderen Worten kann zumindest ein Teil des Getriebes einstückig an dem Behälter und/oder an dem Gleitschieber ausgebildet sein. Damit ergibt sich eine fertigungstechnische Vereinfachung die in einer Zusammenfassung mehrerer Baugruppen des erfindungsgemäßen Automaten besteht.

Eine weitere, sehr vorteilhafte Ausgestaltung der Erfindung besteht darin, dass durch die Steuerungseinheit eine Zeitsteuerung des Elektromotors beziehungsweise des Getriebes und/oder der Bewegung des Gleitschiebers und/oder des Behälters gegeben ist. Die Zeitsteuerung ist beispielsweise von Bedeutung, weil über die Dauer der Überdeckung zwischen Öffnung des Behälters und Auslassöffnung des Gleitschiebers die Stärke des zuzubereitenden Aufgussgetränkes bestimmbar ist.

Besteht das pflanzliche Produkt, das in dem Automaten verarbeitet werden soll, aus Bohnen, so ist es erforderlich, dass dem Gleitschieber, in Transportrichtung des pflanzlichen Produkts betrachtet, ein Mahlwerk zum Zerkleinern des pflanzlichen Produkts nachgeordnet wird. Derartige Mahlwerke sind an sich bekannt und stellen ausgereifte Techniken dar, die daher keiner eingehenden Erläuterung bedürfen.

Vorzugsweise wird das Mahlwerk zwischen Gleitschieber und Brüheinheit angeordnet, so dass die den Gleitschieber passierenden Bohnen unmittelbar in das Mahlwerk gelangen können. Hier werden sie zu einem Pulver gemahlen, dass letztlich in die Brüheinheit überführt wird, um daraus ein Aufgussgetränk zuzubereiten. Dieses kann anschließend in ebenfalls bekannter Weise über eine geeignete Ausgabeeinheit entnommen werden.

Es hat sich darüber hinaus herausgestellt, dass eine sehr einfache Möglichkeit der Befreiung des Mahlwerkes von Resten des zuvor verarbeiteten pflanzlichen Produktes darin besteht, dass das Mahlwerk nach Abschluss des Mahlvorganges für eine vorab definierbare Zeit im Leerlauf betrieben wird. Überraschenderweise gelingt mit einer derartigen Maßnahme eine wesentlich bessere Reinigung des Mahlwerkes, als es mit technisch aufwändigen Einrichtungen, wie beispielsweise mit dem eingangs beschriebenen Schabelement, der Fall ist. Zur Umsetzung dieses Lösungsgedankens kann auf einfache Weise ebenfalls die zuvor bereits beschriebene Steuerungseinheit zum Einsatz kommen.

Eine ganz wesentliche Vereinfachung der Herstellung eines erfindungsgemäßen Automaten ist insgesamt darin zu sehen, dass möglichst viele Einzelteile, wie insbesondere der Behälter, der Gleitschieber und das Getriebe aus Kunststoff hergestellt sind und das Getriebe einstückig an dem Behälter und/oder an dem Gleitschieber angeformt ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen in perspektivischer Ansicht dargestellten Automaten zur Herstellung eines Aufgussgetränkes am Beispiel eines als Standgerät ausgeführten Kaffeeautomaten,
- Figur 2:: ein Prinzipschema der Funktionsweise eines Automaten zur Herstellung eines Aufgussgetränkes,
- Figur 3:: eine aus dem Automaten isolierte Baugruppe entsprechend einem ersten Ausführungsbeispiel der Erfindung in stark vereinfachter Darstellung,
- Figur 4:: den Schnittverlauf IV-IV aus Figur 3,
- Figur 5:: den Schnittverlauf V-V aus Figur 3,
- Figur 6:: eine aus dem Automaten isolierte Baugruppe entsprechend einem zweiten Ausführungsbeispiel der Erfindung in stark vereinfachter Darstellung,
- Figur 7:: eine aus dem Automaten isolierte Baugruppe entsprechend einem dritten Ausführungsbeispiel der Erfindung in stark vereinfachter Darstellung,
- Figur 8:: eine aus dem Automaten isolierte Baugruppe entsprechend einem vierten Ausführungsbeispiel der Erfindung in stark vereinfachter Darstellung,
- Figur 9:: eine aus dem Automaten isolierte Baugruppe entsprechend einem fünften Ausführungsbeispiel der Erfindung in stark vereinfachter Darstellung,
- Figur 10:: einen Blick in Richtung des Pfeils X aus Figur 9,
- Figur 11:: den Schnittverlauf XI-XI aus Figur 9 in den Behälter mit insgesamt vier Kammern
- und Figur 12:: einen Blick in eine Ausführungsvariante eines Behälters mit drei Kammern.

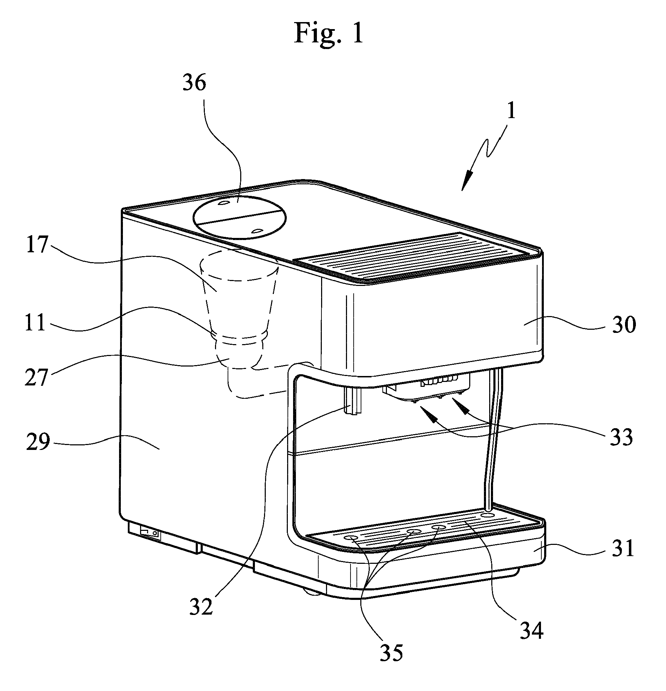

Die Figur 1 zeigt einen in perspektivischer Ansicht dargestellten Automaten 1 zur Herstellung eines Aufgussgetränkes am Beispiel eines als Standgerät ausgeführten Kaffeeautomaten. Das gezeigte Modell weist ein Gehäuse 29 auf, das einen als Bohnenkammer ausgelegten Behälter 17 aufnimmt, der in der Figur 1 lediglich durch gestrichelte Linien angedeutet ist. Der Behälter 17 ist mittig geteilt und kann daher mit zwei verschiedenen Bohnensorten befüllt werden. Das Gehäuse 29 verfügt oberhalb des Behälters 17 über einen geteilten Deckel 36 zum aromatischen Verschluss des Behälters 17. Die Teilung des Deckels 36 entspricht dabei der Anzahl der in dem Behälter 17 vorhandenen Kammern um in jede der Kammern je eine Kaffeesorte einfüllen zu können. Bei dem dargestellten Beispiel ist der Deckel 36 zweigeteilt. Folglich befinden sich in dem Behälter 17 nur zwei Kammern. Unterhalb des Behälters ist ferner ein Gleitschieber 11 angesetzt, der zur Auswahl der gewünschten Kaffeesorte dient. Von dem Gleitschieber 11 wird der Kaffee anschließend in ein Mahlwerk 27 übergeben und dort gemahlen, sodass er in Pulverform zur Zubereitung eines Aufgussgetränkes dienen kann.

Im frontseitigen Bereich des Automaten 1 weist dieser einen oberen Vorsprung 30 und mit einem Höhenabstand versetzt hierzu, einen unteren Vorsprung 31 auf, wobei der obere Vorsprung 30 an seiner Unterseite über eine Dampfdüse 32 zur Abgabe von Wasserdampf sowie über mindestens eine Ausgabeeinheit 33 verfügt. Die Dampfdüse 32 dient in an sich bekannter Weise zum Beispiel dazu, Milchschaum zu erzeugen. Der untere Vorsprung 31 dient hingegen dazu, ein Trinkgefäß unterhalb der Ausgabeeinheit 33 beziehungsweise unterhalb der Dampfdüse 32 abzustellen, das mit dem erzeugten Heißgetränk befüllt oder in dem ein bereits vorhandenes Getränk durch den Wasserdampf der Dampfdüse 32 aufgeschäumt wird. Zum Abstellen des Trinkgefäßes weist der untere Vorsprung 31 eine Abdeckplatte 34 auf, die mit mehreren Öffnungen 35 mit kreisrunder oder schlitzförmiger Geometrie ausgestattet ist, um eventuell überlaufende Flüssigkeitsreste in eine unterhalb der Abdeckplatte 34 vorhandene Auffangschale abzuführen.

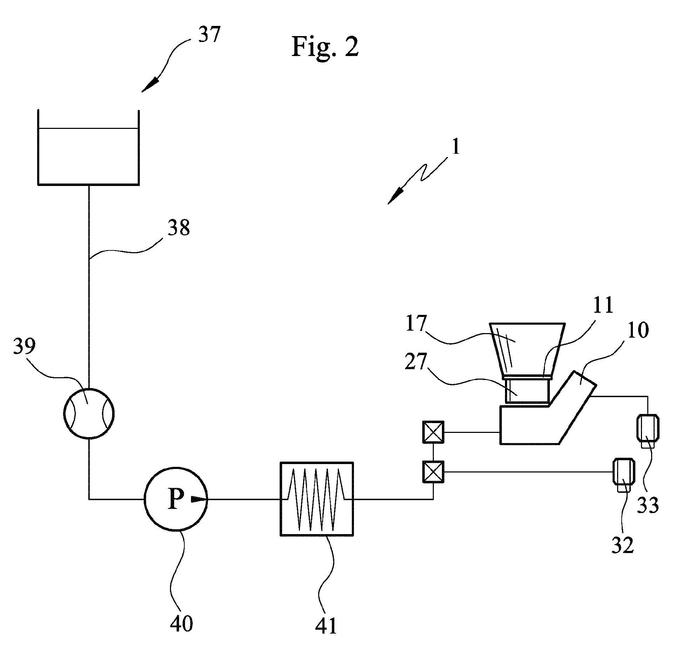

Das in Figur 2 dargestellte, vereinfachte Prinzipschema der Funktionsweise eines Automaten 1 zur Herstellung eines Aufgussgetränkes zeigt zunächst einen Wassertank 37 als Wasserquelle. Selbstverständlich kann anstelle eines Wassertankes auch ein Festanschluss an eine Wasserleitung erfolgen. Dies ist jedoch eher bei stationären Automaten üblich. Der Wassertank 37 ist über eine Strömungsleitung 38 mit dem Strömungsleitungssystem des Automaten 1 verbunden. In Strömungsrichtung des Wassers betrachtet weist die Strömungsleitung 38 ferner ein Durchflussmessgerät 39 in Form eines Flowmeters auf, so dass die aus dem Wassertank 37 entnommene Wassermenge exakt erfasst werden kann. Darüber hinaus dient eine Pumpe 40 zur Förderung des Wassers innerhalb der Strömungsleitung 38. Da mit dem erfindungsgemäßen Automaten 1 vorwiegend Aufgussgetränke zubereitet werden, ist eine Erhitzung des Wassers erforderlich. Hierzu dient eine Heizung 41 beziehungsweise ein Thermostat, das sich in Strömungsrichtung des Wassers betrachtet, hinter der Pumpe 40 befindet. Über in der Figur 2 nicht näher bezeichnete Mehrwegventile wird das somit erhitzte Wasser entweder unmittelbar über die Dampfdüse 32 abgegeben oder in eine Brüheinheit 10 überführt, in der das Aufgussgetränk zubereitet wird und anschließend über eine Ausgabeeinheit 33 entnommen werden kann. Oberhalb der Brüheinheit 10 ist darüber hinaus der Behälter 17 angeordnet, in dem sich die Kaffeebohnen befinden. Nach der mit Hilfe des Gleitschiebers 11 erfolgten Auswahl der gewünschten Kaffeesorte werden die entsprechenden Kaffeebohnen in einem unterhalb des Gleitschiebers 11 vorhandenen Mahlwerk 27 zu Pulver gemahlen und wie bereits erwähnt, in die Brüheinheit 10 überführt.

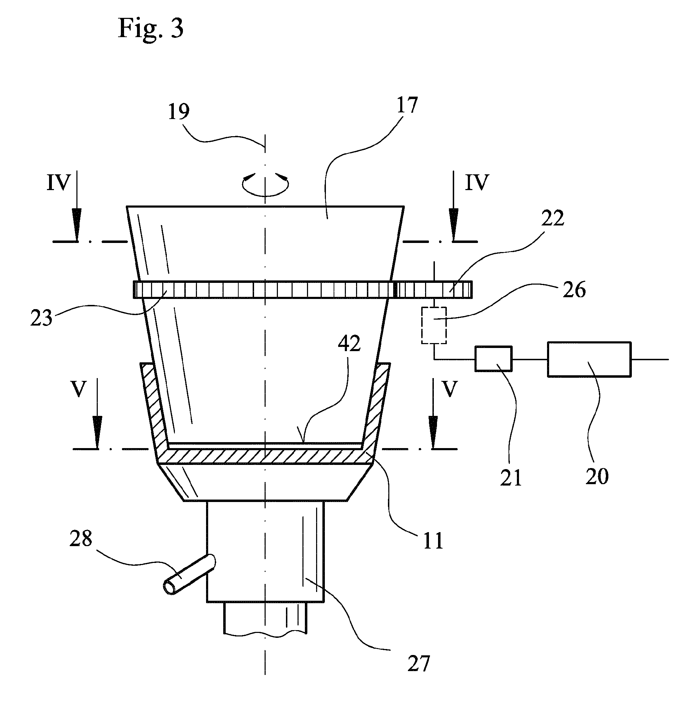

Eine aus dem Automaten 1 isolierte Baugruppe entsprechend einem ersten Ausführungsbeispiel der Erfindung geht in stark vereinfachter Darstellung aus der Figur 3 hervor. Hierbei kommt ein mit einer kreisrunden Geometrie ausgestatteter Behälter 17 zum Einsatz, der dreh- und gleitbeweglich in einen als Aufnahmeschale ausgeführten Gleitschieber 11 eingesetzt ist. Die Drehbewegung erfolgt dabei um eine Rotationsachse 19, wobei der Gleitschieber 11 fixiert sein kann, das heißt, starr angeordnet ist. Der Boden 42 des Behälters 17 gleitet hier unmittelbar auf der Innenoberfläche des Gleitschiebers 11. In dem Behälter 17 sind erfindungsgemäß mindestens zwei Kammern 2, 3 ausgebildet, in denen sich verschiedene Sorten pflanzlicher Produkte, also verschiedene Kaffeesorten befinden. Der Boden 42 des Behälters 17 weist ferner in jeder Kammer 2, 3 je eine Öffnung 6, 7 auf, während der Gleitschieber 11 über eine Auslassöffnung 14 verfügt, die durch die Relativbewegung zwischen Behälter 17 und Gleitschieber 11 jeweils mit einer Öffnung 6, 7 des Behälters 17 in Überdeckung gebracht werden kann. Der Behälter 17 und der Gleitschieber 11 sind ferner aus Kunststoff hergestellt, wobei die Besonderheit darin besteht, dass zumindest ein Zahnkranz 23 von zwei miteinander in Eingriff stehenden Getriebeelementen mit einem Zahnrad 22 in Eingriff steht und der Zahnkranz 23 des somit gebildeten Getriebes 22, 23 unmittelbar an der Außenoberfläche des Behälters 17 angeformt ist und folglich ebenfalls aus Kunststoff besteht. Eine Steuerungseinheit 20 dient insgesamt der Steuerung der innerhalb der in Figur 3 gezeigten Baueinheit ablaufenden Prozesse. So steuert diese Steuerungseinheit 20 im vorliegenden Beispiel den Elektromotor 21, der eine Drehbewegung auf das Zahnrad 22 des Getriebes überträgt. Zur Optimierung der Bewegungsübertragung beziehungsweise zur Erreichung einer geeigneten Übersetzung kann ein Getriebe 26 zwischen Elektromotor und Zahnrad 22 vorgesehen werden, dass aus diesem Grund in der Figur 3 lediglich durch gestrichelte Linien angedeutet ist.

Wurde mit Hilfe der Relativbewegung zwischen Behälter 17 und Gleitschieber 11 eine der in dem Behälter vorhandenen Kaffeesorten ausgewählt, so können die Bohnen zeitgesteuert in ein unterhalb des Gleitschiebers 11 vorhandenes Mahlwerk 27 fallen und dort zu einem Pulver verarbeitet werden. Dieses wird im Anschluss daran über einen Auslass 28 unmittelbar in die Brüheinheit 10 überführt.

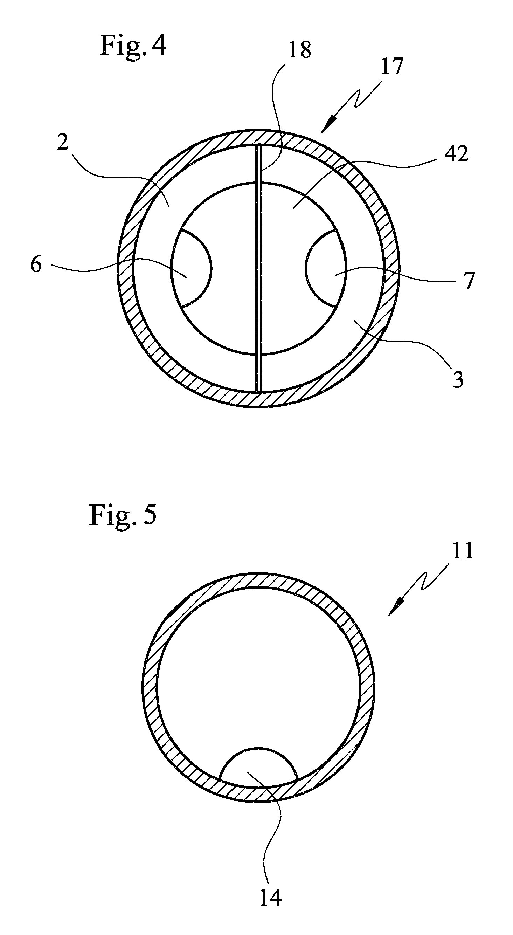

Die Figur 4 zeigt den Schnittverlauf IV-IV aus Figur 3. Daraus wird ersichtlich, dass der Behälter 17 etwa mittig durch eine Trennwand 18 geteilt ist und damit in dem Behälter 17 zwei separate Kammern 2, 3 ausgebildet sind. Am Boden 42 dieser Kammern 2, 3 sind jeweils Öffnungen 6, 7 vorhanden, wobei in der Kammer 2 die Öffnung 6 und in der Kammer 3 die Öffnung 7 angeordnet ist. Diese Öffnungen 6, 7 können mit der, in Pfeilrichtung der Bohnen betrachtet, unterhalb des Behälters 17 im Gleitschieber 11 vorhandenen Auslassöffnung 14 in Überdeckung gebracht werden.

Der Schnittverlauf V-V aus Figur 3 ist darüber hinaus in der Figur 5 dargestellt und erlaubt einen Blick in den Gleitschieber 11. Hieraus wird ersichtlich, dass der Gleitschieber 11 eine Auslassöffnung 14 aufweist, die in der zuvor bereits beschriebenen Weise mit einer der Öffnungen 6, 7 des Behälters 17 in Überdeckung gebracht werden kann.

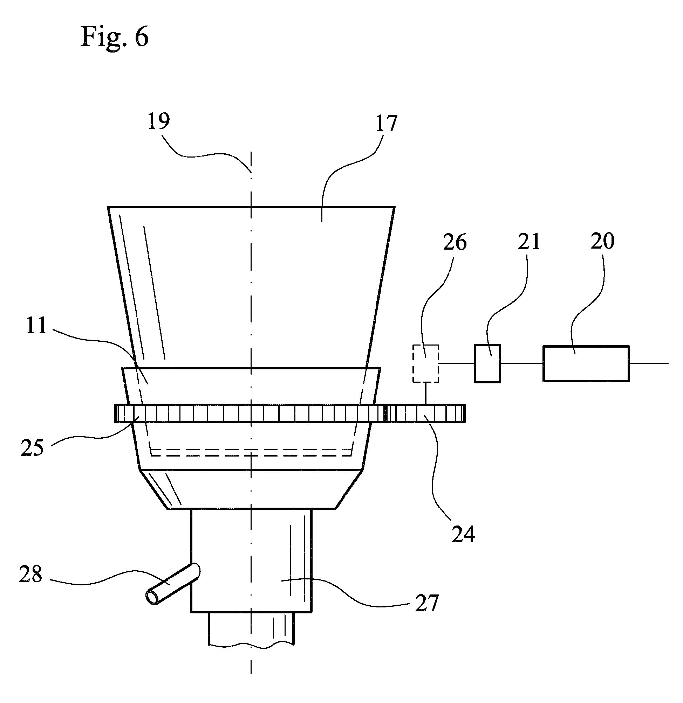

Aus der Figur 6 geht ein weiteres Ausführungsbeispiel einer aus dem Automaten 1 isolierten Baugruppe entsprechend einem zweiten Ausführungsbeispiel der Erfindung in stark vereinfachter Darstellung hervor. Auch hierbei ist ein Behälter 17 in einen als Aufnahmeschale ausgebildeten Gleitschieber 11 eingesetzt und darin um die Rotationsachse 19 dreh- beziehungsweise gleitbeweglich gelagert. Im Unterschied zu der in Figur 3 dargestellten Variante wurde hier ein Getriebe, bestehend aus einem Zahnkranz 25 und einem mit diesem in Eingriff befindlichen Zahnrad 24 gebildet, wobei der Zahnkranz 25 einstückiger Bestandteil des Gleitschiebers 11 ist. Bei dem Beispiel in Figur 3 wird die Drehbewegung vom Elektromotor 21 über ein Getriebe 26 auf den Behälter 17 übertragen, das jedoch nicht zwingend erforderlich ist. In dem in Figur 6 gezeigten Lösungsbeispiel wird die vom Elektromotor 21 erzeugte Drehbewegung in der gleichen Weise auf den Gleitschieber 11 übertragen. Auch hier kann wahlweise ein Getriebe 26 vorgesehen sein. Der Behälter 17 ist bei dieser Bauform starr angeordnet, während sich der Gleitschieber 11 um die Rotationsachse 19 dreht.

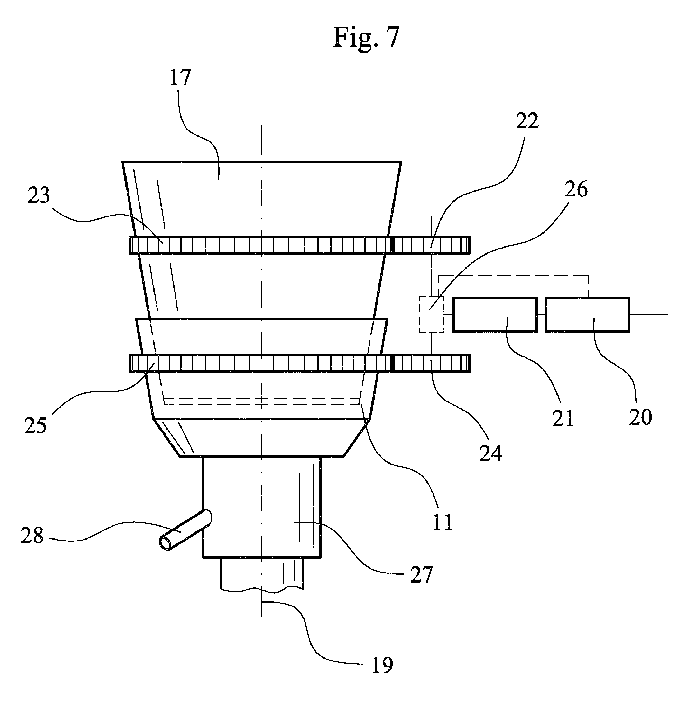

Eine aus dem Automaten isolierte Baugruppe entsprechend einem dritten Ausführungsbeispiel der Erfindung geht ferner in stark vereinfachter Darstellung aus der Figur 7 hervor. Bei dieser Lösung ist sowohl am Behälter 17, als auch am Gleitschieber 11 jeweils ein Getriebe vorgesehen, wobei auch hierbei eine einteilige Ausführung mit dem Behälter 17 beziehungsweise mit dem Gleitschieber 11 vorgesehen ist. Das am Behälter 17 vorhandene Getriebe besteht aus einem einstückig an dem Behälter 17 angeformten Zahnkranz 23 und einem mit diesem in Eingriff befindlichen Zahnrad 22. An den Gleitschieber 11 ist darüber hinaus ein Zahnkranz 25 angeformt, der eine kraftübertragende Verbindung zu einem Zahnrad 24 aufweist. Die Steuerungseinheit 20 wird hierbei dazu verwendet, unmittelbar den Elektromotor 21 anzusteuern, der direkt oder wahlweise über ein zwischengeschaltetes Getriebe 26 mit den Zahnrädern 22 beziehungsweise 24 verbunden ist. Darüber hinaus kann die Steuerungseinheit 20 auch unmittelbar auf das Getriebe 26 einwirken. Die verschiedenen Möglichkeiten, welche teilweise durch gestrichelte Linien angedeutet sind, sollen lediglich verdeutlichen, dass die Einwirkung der Steuerungseinheit 20 auf unterschiedliche Weise erfolgen kann. Maßgeblich ist hierbei die Erzielung einer Relativbewegung zwischen Gleitschieber 11 und Behälter 17, so dass die Auslassöffnung 14 des Gleitschiebers 11 mit einer der in dem Behälter 17 beziehungsweise in dessen Kammern vorhandenen Öffnungen in Überdeckung gebracht werden kann, um dadurch eine der in den Kammern des Behälters 17 vorhandenen Kaffeesorten auszuwählen.

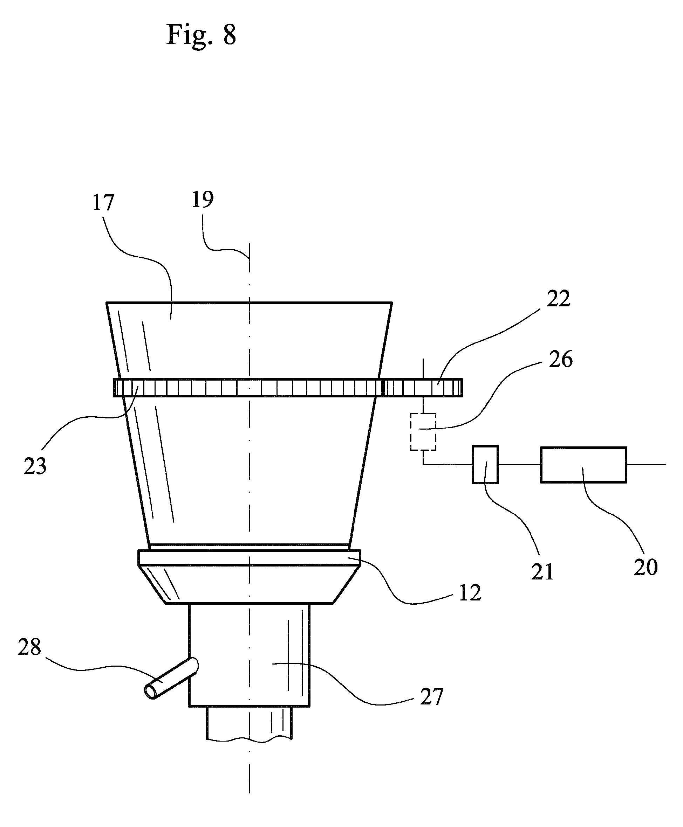

Die Figur 8 zeigt eine vierte Ausführungsvariante einer aus dem Automaten 1 isolierten Baugruppe, ebenfalls in stark vereinfachter Darstellung. Hierbei ist der Behälter 17 mit dem daran angeordneten Getriebe 22, 23 baugleich zu der Ausführung in Figur 3. Der Unterschied zu der in Figur 8 dargestellten Lösung besteht in der Gestaltung des Gleitschiebers 12, der vorliegend als eine einfache Scheibe ausgeführt ist. Diese in einer Führung um die Rotationsachse 19 drehbar gelagerte Scheibe weist in der zuvor bereits beschriebenen Weise ebenfalls mindestens eine Auslassöffnung 14 auf, die mit einer der Öffnungen im Boden 42 des Behälters 17 in Überdeckung gebracht werden kann.

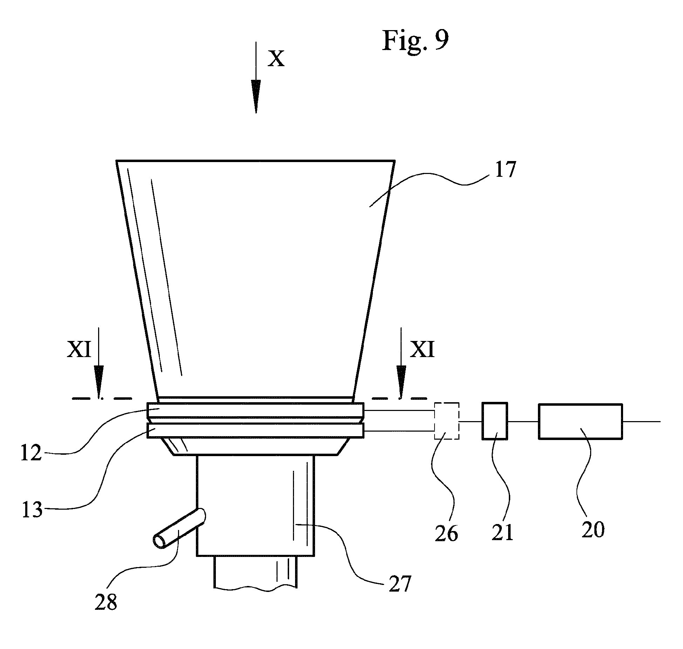

Bei dem Beispiel in Figur 9 ist weiterhin eine aus dem Automaten 1 isolierte Baugruppe entsprechend einem fünften Ausführungsbeispiel der Erfindung in stark vereinfachter Darstellung veranschaulicht. Diese weist im Unterschied zu den zuvor beschriebenen Varianten einen Gleitschieber mit zwei koaxial übereinander angeordneten Scheiben 12 und 13 auf, die um eine gemeinsame Rotationsachse 19 relativ zueinander drehbar gelagert sind. Darüber hinaus besteht ein wesentlicher Unterschied zu den zuvor beschriebenen Lösungen darin, dass hierbei unmittelbar eine Ansteuerung der beiden Scheiben 12 und 13 des Gleitschiebers erfolgt. Hierzu ist ebenfalls die in dem Automaten 1 vorhandene Steuerungseinheit 20 nutzbar, die den Elektromotor und/oder wahlweise ein Getriebe 26 ansteuert.

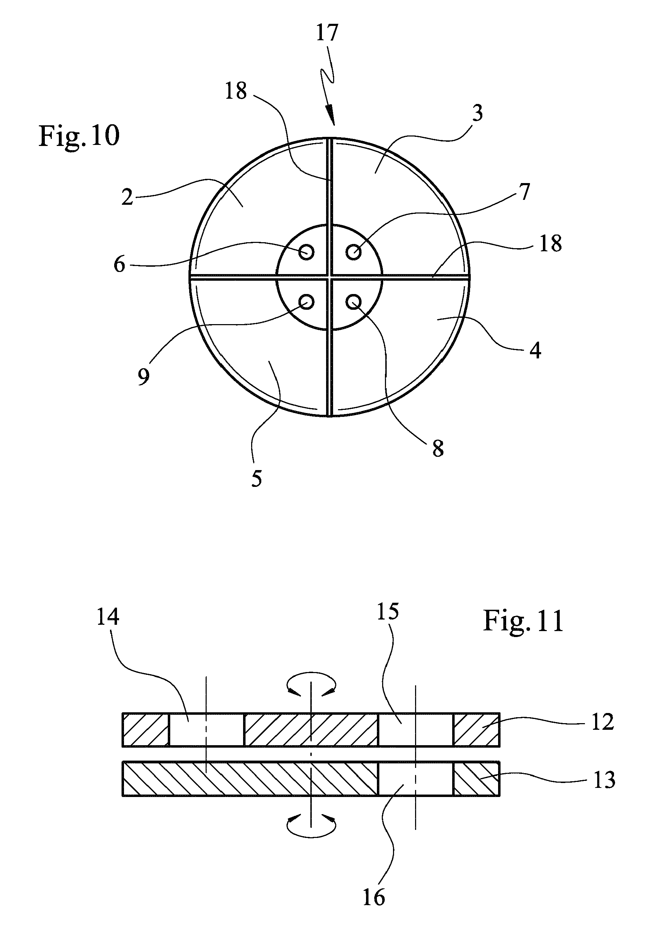

Zur Verdeutlichung des Aufbaus der in Figur 9 gezeigten Ausführung erlaubt die Darstellung in Figur 10 einen Blick in Richtung des Pfeils X aus Figur 9, also einen Blick in den Behälter 17 mit insgesamt vier Kammern 2, 3, 4, 5. Daraus wird ersichtlich, dass am Boden 42 des Behälters 17 in jeder der Kammern 2, 3, 4, 5 je eine Öffnung 6, 7, 8, 9 vorhanden ist, durch die je eine Kaffeesorte abgeführt werden kann. Bei einer derartigen Ausführung wäre es theoretisch möglich, wenn beispielsweise zunächst eine Kaffeesorte aus der Kammer 2 ausgewählt wurde und im Anschluss eine Kaffeesorte aus der Kammer 4 Verwendung finden soll, dass durch Drehung des Gleitschiebers und einem damit in Abhängigkeit von der Drehrichtung gegebenen Passieren der Öffnung 9 der Kammer 5 oder der Öffnung 7 der Kammer 3, Kaffeebohnen aus der Kammer 4 oder aus der Kammer 5 in das Mahlwerk 27 gelangen, was eine unerwünschte Vermischung von unterschiedliche Kaffeesorten bedeuten würde.

Um dies zu verhindern, besteht entsprechend dem Schnittverlauf XI-XI in Figur 9 der Gleitschieber aus zwei koaxial übereinander angeordneten Scheiben 12 und 13. Dabei verfügt die Scheibe 12 über insgesamt zwei Auslassöffnungen 14 und 15 und die darunter befindliche Scheibe 13 über eine Auslassöffnung 16. Durch entsprechende logische Anwahl der einzelnen Scheiben und eine durch die Steuerungseinheit 20 erfolgende Ansteuerung ist es mit einer derartigen Lösung möglich, die zuvor beschriebene und unerwünschte Überdeckung der Öffnung einer Kammer mit der Auslassöffnung des Gleitschiebers 12, 13 zu vermeiden und nur die tatsächlich ausgewählte Öffnung einer Kammer mit der entsprechenden Auslassöffnung des Gleitschiebers 12, 13 zu kombinieren.

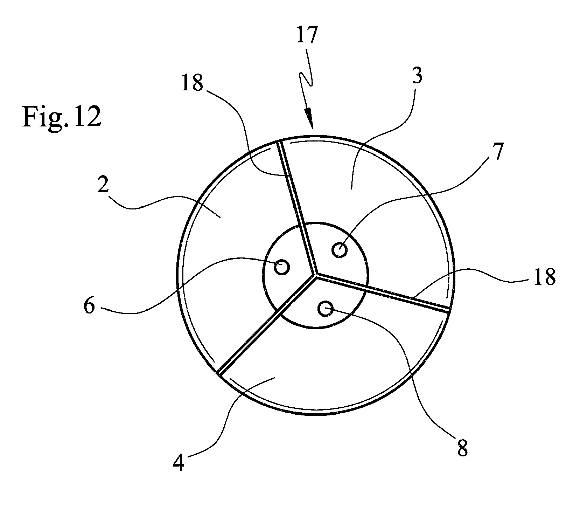

Schließlich ist in der Figur 12 ein Blick in eine weitere Ausführungsvariante eines Behälters 17 mit insgesamt drei Kammern 2, 3, 4 dargestellt. Am Boden 42 dieses Behälters 17 ist in jeder der Kammern 2, 3, 4 je eine Öffnung 6, 7, 8 vorhanden, durch die entsprechend der über die Steuerungseinheit 20 vollzogenen Auswahl die in der Kammer vorhandene Kaffeesorte durch die korrespondierende Auslassöffnung des Gleitschiebers in das darunter befindliche Mahlwerk 27 beziehungsweise in die Brüheinheit 10 überführt werden kann.

### BEZUGSZEICHENLISTE:

- 1: Automat
- 2: Kammer
- 3: Kammer
- 4: Kammer
- 5: Kammer
- 6: Öffnung
- 7: Öffnung
- 8: Öffnung
- 9: Öffnung
- 10: Brüheinheit
- 11: Gleitschieber (Aufnahmeschale)
- 12: Gleitschieber (Scheibe)
- 13: Gleitschieber (Scheibe)
- 14: Auslassöffnung
- 15: Auslassöffnung
- 16: Auslassöffnung
- 17: Behälter
- 18: Trennwand
- 19: Rotationsachse
- 20: Steuerungseinheit
- 21: Elektromotor
- 22: Getriebe
- 23: Getriebe
- 24: Getriebe
- 25: Getriebe
- 26: Getriebe
- 27: Mahlwerk
- 28: Auslass
- 29: Gehäuse
- 30: oberer Vorsprung
- 31: unterer Vorsprung
- 32: Dampfdüse
- 33: Ausgabeeinheit
- 34: Abdeckplatte
- 35: Öffnungen
- 36: Deckel
- 37: Wassertank
- 38: Strömungsleitung
- 39: Durchflussmessgerät
- 40: Pumpe
- 41: Heizung/Thermostat
- 42: Boden

## Patentansprüche

1. Automat (1) zur Herstellung eines Aufgussgetränkes umfassend mindestens zwei, zur Aufnahme je einer Sorte eines pflanzlichen Produkts geeignete Kammern (2, 3, 4, 5), die bodenseitig jeweils wenigstens eine Öffnung (6, 7, 8, 9) aufweisen, durch die das pflanzliche Produkt unter Nutzung der Schwerkraft in eine Brüheinheit (10) überführbar ist,
**dadurch gekennzeichnet, dass**
den Kammern (2, 3, 4, 5), in Transportrichtung des pflanzlichen Produktes betrachtet, ein Gleitschieber (11, 12, 13) nachgeordnet ist, der zum Öffnen einer der Kammern (2, 3, 4, 5) mindestens eine, mit der Öffnung (6, 7, 8, 9) dieser Kammer (2, 3, 4, 5) in Überdeckung bringbare Auslassöffnung (14, 15, 16) aufweist.

2. Automat nach Anspruch 1,
**dadurch gekennzeichnet, dass**
ein die Kammern (2, 3, 4, 5) aufweisender Behälter (17) vorhanden ist.

3. Automat nach Anspruch 2,
**dadurch gekennzeichnet, dass**
die Aufteilung des Behälters (17) in die Kammern (2, 3, 4, 5) durch mindestens eine, in dem Behälter ausgebildete oder in den Behälter einsetzbare Trennwand (18) gegeben ist.

4. Automat nach einem der Ansprüche 2 oder 3,
**dadurch gekennzeichnet, dass**
durch eine Drehung des Gleitschiebers (11, 12, 13) und/oder des Behälters (17) um eine Rotationsachse (19) oder durch ein Verschieben des Gleitschiebers (11, 12, 13) und/oder des Behälters (17) entlang einer Ebene eine Relativbewegung zwischen Gleitschieber (11, 12, 13) und Behälter (17) gegeben ist.

5. Automat nach einem der vorstehend genannten Ansprüche,
**dadurch gekennzeichnet, dass**
der Gleitschieber (11, 12, 13) als eine Aufnahmeschale (11) ausgeführt oder als einzelne Scheibe (12) ausgebildet ist.

6. Automat nach einem der Ansprüche 1 bis 4,
**dadurch gekennzeichnet, dass**
der Gleitschieber (11, 12, 13) aus wenigstens zwei koaxial übereinander angeordneten Scheiben (12, 13) mit jeweils mindestens einer Auslassöffnung (14, 15, 16) besteht.

7. Automat nach einem der vorstehend genannten Ansprüche,
**dadurch gekennzeichnet, dass**
eine Steuerungseinheit (20) zur Ansteuerung einer Bewegung des Behälters (17) und/oder des Gleitschiebers (11, 12, 13) vorhanden ist, wobei ferner zwischen einem Elektromotor (21) und dem Behälter (17) beziehungsweise zwischen Elektromotor (21) und Gleitschieber (11, 12, 13) ein Getriebe (22, 23, 24, 25, 26) angeordnet und die Steuerungseinheit (20) zur Ansteuerung des Elektromotors (21) beziehungsweise des Getriebes (22, 23, 24, 25, 26) ausgebildet ist.

8. Automat nach Anspruch 7,
**dadurch gekennzeichnet, dass**
der Elektromotor (21) ein Schrittmotor ist.

9. Automat nach Anspruch 7 oder 8,
**dadurch gekennzeichnet, dass**
das Getriebe (22, 23, 24, 25, 26) ein Zahnrad- oder ein Reibradgetriebe ist.

10. Automat nach Anspruch 9,
**dadurch gekennzeichnet, dass**
das als Zahnrad- oder Reibradgetriebe ausgeführte Getriebe (22, 23, 24, 25, 26) integraler Bestandteil des Behälters (17) und/oder des Gleitschiebers (11, 12, 13) ist.

11. Automat nach einem der Ansprüche 7 bis 10,
**dadurch gekennzeichnet, dass**
durch die Steuerungseinheit (20) eine Zeitsteuerung des Elektromotors (21) beziehungsweise des Getriebes (22, 23, 24, 25, 26) und/oder der Bewegung des Gleitschiebers (11, 12, 13) und/oder des Behälters (17) gegeben ist.

12. Automat nach einem der vorstehend genannten Ansprüche,
**dadurch gekennzeichnet, dass**
dem Gleitschieber (11, 12, 13) in Transportrichtung des pflanzlichen Produkts betrachtet ein Mahlwerk (27) zum Zerkleinern des pflanzlichen Produkts nachgeordnet ist.

13. Automat nach Anspruch 12,
**dadurch gekennzeichnet, dass**
das Mahlwerk (27) zwischen Gleitschieber (11, 12, 13) und Brüheinheit (10) angeordnet ist.

14. Automat nach einem der Ansprüche 12 oder 13,
**dadurch gekennzeichnet, dass**
das Mahlwerk (27) zur Befreiung von Resten der darin verarbeiteten pflanzlichen Produkte nach Abschluss des Mahlvorganges für eine vorab definierbare Zeit im Leerlauf betreibbar ist.

15. Automat nach einem der vorstehend genannten Ansprüche,
**dadurch gekennzeichnet, dass**
der Behälter (17), der Gleitschieber (11, 12, 13) und das Getriebe (22, 23, 24, 25, 26) aus Kunststoff hergestellt sind und das Getriebe (22, 23, 24, 25, 26) einstückig an dem Behälter (17) und/oder an dem Gleitschieber (11, 12, 13) angeformt ist.
